# EUROPÄISCHE PATENTSCHRIFT

(11) **EP 2 728 043 B1**
(45) Veröffentlichungstag und Bekanntmachung des Hinweises auf die Patenterteilung: **10.08.2016**
(21) Anmeldenummer: 13004961.2
(22) Anmeldetag: 17.10.2013
(51) Int. Cl.: D01H 7/04, F16C 17/08, F16C 27/02, F16C 27/06, F16C 17/10

(54) **Fußlagereinheit einer Spindellagervorrichtung, Spindellagervorrichtung und Textilmaschine**
Base bearing unit for a spindle bearing device, spindle bearing device and textile machine
Unité de palier d'un dispositif de coussinet de broche, dispositif de coussinet de broche et machine textile

(30) Priorität: 31.10.2012 DE 102012021439
(43) Veröffentlichungstag der Anmeldung: 07.05.2014
(73) Patentinhaber: Saurer Components GmbH, 70736 Fellbach (DE)
(72) Erfinder: Winter, Josef, 73650 Winterbach (DE)
(74) Vertreter: Morgenthum-Neurode, Mirko

(56) Entgegenhaltungen:
- DE-B- 1 118 669
- DE-C2- 4 427 311
- FR-A- 1 361 823
- US-A- 3 798 888

## Beschreibung

Die Erfindung betrifft eine Spindellagervorrichtung mit Fußlagereinheit zum Lagern einer Spindel, insbesondere einer Spinn-, Zwirn- oder Umwindespindel, wobei die Fußlagereinheit ein Spindelaxiallagerelement zum axialen Lagern der Spindel und ein Spindelradiallagerelement zum radialen Lagern der Spindel aufweist, wobei das Spindelaxiallagerelement und das Spindelradiallagerelement in einem gemeinsamen Lagerbuchsenelement gehaltert sind.

Die Erfindung betrifft darüber hinaus eine Textilmaschine mit wenigstens einer Spinn-, Zwirn- oder Umwindespindel.

Insbesondere gattungsgemäße Fußlagereinheiten sind an Spindellagervorrichtungen von Textilmaschinen bereits erfolgreich eingesetzt und damit aus dem Stand der Technik im Allgemeinen auch hinreichend gut bekannt. Diese Fußlagereinheiten bauen oftmals jedoch sehr aufwändig und weisen je nach vorhandener Betriebstemperatur Unterschiede zwischen ihren Federungs- und Dämpfungseigenschaften auf.

Beispielsweise ist eine solche Spindellagervorrichtung zum Lagern einer Spinn-, Zwirn- oder Umwindespindel aus der Patentschrift DE 44 27 311 C2 bekannt, bei welcher sowohl ein Fußlager als auch ein Halslager in einem Gehäuse der Spindellagervorrichtung festgelegt sind. Das Fußlager weist ein Außenrohr und ein Innenrohr auf, und im letzteren sind zum axialen und radialen Lagern der jeweiligen Spindel neben einem scheibenförmigen Axiallager auch ein als Gleitlagerbuchse ausgestaltetes Radiallager angeordnet. Zwischen dem Innenrohr und dem Außenrohr ist eine radial wirkende Dämpfungsvorrichtung in Form eines spiralförmigen Elements, zwischen dessen Windungen sich Öl oder Fett befindet, angeordnet. Darüber hinaus befinden sich kopfseitig beidseits des spiralförmigen Elements zusätzlich noch radial wirkende Federelemente in Gestalt von Spiralfedern. Das Fußlager ist über das Außenrohr fest mit dem Gehäuse der Spindellagervorrichtung verbunden. Diese Verbindung kann noch durch ein Außenrohr mit einem von einer Kreisform abweichenden Querschnitt verstärkt werden. Zwar scheint diese Spindellagervorrichtung eine variable Lagerung von unterschiedlichen Spindeln zu ermöglichen, jedoch besitzt die Spindellagervorrichtung im Hinblick auf sich verändernde Betriebstemperaturen nachteilig untereinander stark variierende Federungs- und Dämpfungseigenschaften. Außerdem baut diese Spindellagervorrichtung insbesondere durch die separaten Bauteile hinsichtlich der radial wirkenden Dämpfungsvorrichtung relativ aufwändig.

Es ist Aufgabe vorliegender Erfindung, zumindest die vorgenannten Nachteile gattungsgemäßer Spindellagervorrichtungen zu überwinden und eine konstruktiv einfache und platzsparende Spindellagervorrichtung zu schaffen.

Die Aufgabe der Erfindung wird von einer Spindellagervorrichtung mit einer Fußlagereinheit zum Lagern einer Spindel gelöst, wobei die Fußlagereinheit ein Spindelaxiallagerelement zum axialen Lagern der Spindel und ein Spindelradiallagerelement zum radialen Lagern der Spindel aufweist, wobei das Spindelaxiallagerelement und das Spindelradiallagerelement in einem gemeinsamen Lagerbuchsenelement gehaltert sind, und wobei das gemeinsame Lagerbuchsenelement mittels wenigstens eines einstückig und elastisch ausgestalteten Axial-Radial-Abstützelements an einer Gehäusehülse der Spindellagervorrichtung sowohl axial als auch radial gelagert angeordnet ist.

Erfindunggemäß wird die Konstruktion der Fußlagerung dadurch weiter vereinfacht, dass das einstückig und elastisch ausgestaltete Axial-Radial-Abstützelement zumindest teilweise in einem Zwischenbereich zwischen einer Innenwandung und einer Außenwandung des Lagerbuchsenelements innerhalb des Lagerbuchsenelements angeordnet ist.

Durch das einstückig und elastisch ausgestaltete Axial-Radial-Abstützelement gelingt es vorteilhafterweise, gattungsgemäße Spindellagervorrichtungen bei gleichbleibender Standzeit konstruktiv wesentlich einfacher zu gestalten, da insbesondere auf aufwändig aufgebaute Radialdämpfungseinrichtungen verzichtet werden kann.

Hierbei ist das gemeinsame Lagerbuchsenelement mittels wenigstens dieses einen einstückig und elastisch ausgestalteten Axial-Radial-Abstützelements an der Gehäusehülse sowohl axial als auch radial beweglich gelagert angeordnet.

Da durch das erfindungsgemäße Axial-Radial-Abstützelement das Lagerbuchsenelement nicht nur radial gegenüber der Gehäusehülse abgestützt werden kann, sondern sogleich auch axial, kann vorteilhaft auf solche zusätzlichen Axialabstützelemente verzichtet werden, wodurch die Fußlagereinheit mit einer besonders geringen Anzahl an Bauteilen realisiert werden kann. Insofern kann auf separate Axialfeder und Radialdämpfungselemente verzichtet werden. Hierdurch reduzieren sich auch die Ausfallwahrscheinlichkeit sowie die Wartungsbedürftigkeit erheblich.

Vorteilhafterweise kann dieses einstückig und elastisch ausgestaltete Axial-Radial-Abstützelement in Gestalt eines einzigen und einstückig ausgebildeten Federungs- und Dämpfungselement insgesamt auch kostengünstiger hergestellt werden als etwa zwei herkömmliche voneinander getrennte Funktionsbauteile.

Die Anordnung des einstückig und elastisch ausgestalteten Axial-Radial-Abstützelement in einem Zwischenbereich des Lagerbuchsenelements kann beispielsweise einfach dadurch erreicht werden, dass das Axial-Radial-Abstützelement auf ein innenliegendes Zentrier- und/oder Haltedornteil des Lagerbuchsenelements aufgesteckt und damit konstruktiv einfach innerhalb des Lagerbuchsenelements positioniert wird. Es wird platzsparende Konstruktion erreicht, die gleichzeitig eine optimale radiale Rückstellung der Spindel ermöglicht

Das vorliegende einstückig und elastisch ausgestaltete Axial-Radial-Abstützelement kann vorteilhafterweise einfach als Vollkörperelement ausgestaltet sein, wobei das Vollkörperelement ein Sackloch zum zumindest teilweisen Aufnehmen dieses innenliegenden Zentrier- und/oder Haltedornteils aufweist.

Vorteilhafterweise ist zwischen der Innenwandung oder der Außenwandung des Lagerbuchselementes auf der einen und dem Axial-Radial-Abstützelements auf der anderen Seite ein Spalt für ein Dämpfungsfluidmittel vorhanden ist. Als Dämpfungsfluidmittel kommt zum Beispiel Öl in Frage. Das Dämpfungsfluidmittel in dem Spalt sorgt dafür, dass die radiale Rückstellung der Spindel durch das einstückig und elastisch ausgestaltete Axial-Radial-Abstützelement optimal gedämpft wird.

Eine besonders langlebige und wartungsarme Ausführungsvariante sieht vor, dass zwei einstückig und elastisch ausgestaltete Axial-Radial-Abstützelemente axial beanstandet voneinander zumindest teilweise innerhalb des Lagerbuchsenelements angeordnet sind. Mit dieser Ausführungsvariante kann gleichzeitig eine besonders stabile Lagerung der Fußlagereinheit in der Gehäusehülse der Spindelvorrichtung erzielt werden.

Vorteilhafterweise kann hierbei das einstückig und elastisch ausgestaltete Axial-Radial-Abstützelement als Hülsenkörperelement sogleich eine Materialausnehmung zum Aufnehmen der Spindel ausgestalten, so dass es nicht nur an einem der Spindel abgewandten Ende des Lagerbuchsenelements, sondern auch an einem der Spindel zugewandten Ende des Lagerbuchsenelements vorteilhaft platziert werden kann.

Alternativ könnte an dem der Spindel abgewandten Ende des Lagerbuchsenelements auch ein Bolzenkörperelement als einstückig und elastisch ausgestaltetes Axial-Radial-Abstützelement mit oder ohne Sackloch vorgesehen sein.

Selbst bei einem Einsatz von schweren Spindeln kann vorliegend vorteilhaft ein Öl mit geringerer Viskosität zum Einsatz kommen.

Eine besonders bevorzugte Ausführungsvariante sieht vor, dass das einstückig und elastisch ausgestaltete Axial-Radial-Abstützelement als ein Hülsenkörperelement ausgestaltet ist. Aber auch eine Variante in Form eines Bolzenkörperelements könnte bei entsprechend ausgestaltetem Lagerbuchsenelement vorteilhaft sein.

Der Begriff "Hülsenkörperelement" beschreibt im Sinne der Erfindung ein innen vorzugsweise durchgängig hohles und dementsprechend im Wesentlichen rohrartiges Element. Je nach Aufbau des Lagerbuchsenelements kann es aber auch nur teilweise hohl ausgebildet sein.

Diesem Hülsenkörperelement wohnen als einstückig und elastisch ausgestaltetem Axial-Radial-Abstützelement vorteilhafterweise einerseits Federungs- und andererseits vorzugsweise auch Dämpfungseigenschaften inne; und zwar sowohl in Axialrichtung als auch in Radialrichtung, wobei die Axialrichtung vorliegend durch die Längserstreckung der Fußlagereinheit und insbesondere der Anordnungsrichtung der zu lagemden Spindel formuliert ist. Entsprechend verläuft die Radialrichtung quer hierzu.

Die Begrifflichkeit "Lagerbuchsenelement" umschreibt im Sinne der Erfindung ein Buchsenelement, in welchem ein Spindelaxiallagerelement und ein Spindelradiallagerelement der Spindellagervorrichtung gemeinsam angeordnet sind.

Vorzugsweise handelt es sich bei dem vorliegenden Lagerbuchsenelement um ein mittels Öl radialgedämpftes Lagerbuchsenelement, bei welchem sich insbesondere in einem Ölspalt zwischen der Gehäusehülse und dem Lagerbuchsenelement umfangsseitig des Lagerbuchsenelements ein dämpfendes Dämpfungsfluidmittel befindet.

Das Spindelaxiallagerelement ist hierbei vorzugsweise aus einem gehärteten Stahl und das Spindelradiallagerelement vorzugsweise aus einer Kupferlegierung hergestellt.

Das Lagerbuchsenelement kann bevorzugt ein Dämpfungslagerbuchsenelement aus einem Kunststoff oder einem Compound hieraus umfassen, so dass ihm selbst zusätzlich vorteilhafte Dämpfungseigenschaften innewohnen können. Zudem kann ein Lagerbuchsenelement aus einem Kunststoff besonders kostengünstig hergestellt werden.

Insofern zeichnet sich das vorliegende Lagerbuchsenelement durch einen extrem vereinfachten Aufbau bei verbesserten Eigenschaften aus, so dass dieses herkömmliche Fußlagereinheiten auch ohne die übrigen Merkmale der vorliegenden Erfindung vorteilhaft weiterentwickelt.

Es versteht sich, dass das Lagerbuchsenelement auch aus einem anderen Werkstoff hergestellt sein kann, wie etwa einem Metall. Dies wäre ohne weiteres möglich, da die Dämpfung vorliegend im Wesentlichen durch Ölverdrängung erzielt wird.

Konstruktiv außerordentlich einfach kann die vorliegende Fußlagereinheit bereitgestellt werden, wenn das einstückig und elastisch ausgestaltete Axial-Radial-Abstützelement einen zylindrischen Grundkörper mit einem radial auskragenden Kragenteil aufweist, welches an einer Kopfseite des Lagerbuchsenelements sowohl axial als auch radial über das Lagerbuchsenelement übersteht.

Eine darüber hinausgehende außergewöhnlich vorteilhafte Ausführungsvariante sieht vor, dass das einstückig und elastisch ausgestaltete Axial-Radial-Abstützelement derart ausgestaltet ist, dass ein Rückstellkräftevermögen des einstückig und elastisch ausgestalteten Axial-Radial-Abstützelements und ein Dämpfungsvermögen eines Dämpfungsfluidmittels der Fußlagereinheit mit zunehmender Spindellagerbetriebstemperatur proportional zueinander abnehmbar ausgebildet sind.

Hierdurch kann vorteilhafterweise nach einem weiteren Aspekt der Erfindung erzielt werden, dass sich ein gut abgestimmtes Verhältnis zwischen dem Rückstellkräftevermögen und dem Dämpfungsvermögen nicht oder nur unkritisch verschiebt.

Insbesondere hierdurch kann die Gefahr erheblich verringert werden, dass sich die Laufeigenschaften der erfindungsgemäßen Fußlagereinheit bzw. der vorliegenden Spindellagervorrichtung unabhängig von der Spindellagervorrichtungs- und/oder Öltemperatur kaum bzw. nur vernachlässigbar gering ändern.

Insbesondere eine Radialdämpfung wird an gattungsgemäßen Spindellagervorrichtungen oftmals größtenteils mittels eines Dämpfungsfluidmittels in Gestalt eines Öls bewerkstelligt. Dies hat jedoch den Nachteil, dass bis zum Erreichen der Betriebstemperatur und darüber hinaus auch mit zunehmender Betriebstemperatur der Spindellagervorrichtung die Viskosität des Öls mit der Folge abnimmt, dass sich das mit dem Öl erzielbare Dämpfungsvermögen teilweise kritisch reduziert, ein Rückstellkräftevermögen eines Federelements jedoch nahezu gleich bleibt, oder sich nur unwesentlich verändert bzw. reduziert. Vorteilhafterweise wird dieser Nachteil mit dem vorliegenden einstückig und elastisch ausgestalteten Axial-Radial-Abstützelement überwunden.

Zudem ist dies außerordentlich vorteilhaft, wenn insbesondere eine Radialdämpfung ausschließlich mittels des Öls erfolgt, wie dies vorliegend vorzugsweise der Fall ist.

Das vorliegende einstückig und elastisch ausgestaltete Axial-Radial-Abstützelement kann baulich besonders vorteilhaft bereitgestellt werden, wenn es ein Elastomerfederkörperelement umfasst.

Insbesondere mittels eines derartigen Elastomerfederkörperelements kann an einer Fußlagereinheit konstruktiv einfach sichergestellt werden, dass sich ein gut abgestimmtes Verhältnis zwischen dem Rückstellkräftevermögen und dem Dämpfungsvermögen nicht oder nur unkritisch verschiebt.

Derartige Elastomerfederkörperelemente können wesentlich kostengünstiger hergestellt werden als bisher verwendete Metallfederelemente.

Darüber hinaus sind sie vorteilhaft, da keine besonderen Maßnahmen bezüglich eines Formschlusses erforderlich sind, wie dies bei bisher eingesetzten Varianten mit Schraubenfedern an Enden eines Dämpfungsschraubenelements erforderlich ist.

Aufgrund der weicheren Beschaffenheit des Elastomerfederkörperelements können insbesondere die Anforderungen an Herstellungstoleranzen verringert werden, wodurch die Fußlagereinheit konstruktiv weiter vereinfacht werden kann.

Der Begriff "Elastomerfederkörperelement" beschreibt im Sinne vorliegender Erfindung einen Federkörper aus einem Elastomer, welches sich durch einen formfesten, aber elastisch verformbaren Kunststoff auszeichnet, dessen Glasübergangstemperatur sich unterhalb der Einsatztemperatur befindet.

Insofern liegt die Glasübergangstemperatur des vorliegenden einstückig und elastisch ausgestalteten Axial-Radial-Abstützelements oberhalb von 60° C, idealerweise oberhalb von 80° C.

Vorteilhafterweise kann das Elastomerfederkörperelement kumulativ auch dämpfend wirken.

Trotz der Ausgestaltung des einstückig und elastisch ausgestalteten Axial-Radial-Abstützelements als Elastomerfederkörperelement können herkömmliche Standzeiten von 8 Jahren bis 25 Jahren problemlos erzielt werden, wobei die kürzeren Standzeiten für Spindellagervorrichtungen zutreffend sind, welche mit hohen Spindeldrehzahlen von 18.000 min⁻¹ bis 25.000 min⁻¹ betrieben werden. Diese hohen Spindeldrehzahlen werden insbesondere bei einer Verarbeitung feinerer Garne erreicht.

Eine Halslagereinheit und die Fußlagereinheit können in der Gehäusehülse der Spindellagervorrichtung angeordnet sein.

Beispielsweise kann bei dem vorliegenden einstückig und elastisch ausgestalteten Axial-Radial-Abstützelement ein Elastomerfederkörper aus einem thermoplastischen Elastomer, wie einem thermoplastischen Polyurethan, vorteilhaft zum Einsatz kommen.

In diesem Zusammenhang ist es vorteilhaft, wenn das einstückig und elastisch ausgestaltete Axial-Radial-Abstützelement derart ausgestaltet ist, dass bei einer Erhöhung einer Spindellagervorrichtungsbetriebstemperatur von 20° C auf 60° C eine damit einhergehende Rückstellkräftereduzierung des einstückig und elastisch ausgestalteten Axial-Radial-Abstützelements weniger als 20%, vorzugsweise von weniger als 10%, von einer damit ebenfalls einhergehenden Dämpfuhgsvermögensreduzierung des Dämpfungsfluidmittels abweicht. Allein hierdurch lassen sich die Laufeigenschaften gegenüber herkömmlichen Fußlagereinheiten vorteilhaft verbessern. Dieses kann insbesondere mit dem vorliegenden Elastomerfederkörperelement problemlos erzielt werden.

Des Weiteren ist es vorteilhaft, wenn das einstückig und elastisch ausgestaltete Axial-Radial-Abstützelement derart ausgestaltet ist, dass mit zunehmender Spindellagerbetriebstemperatur von 20° C auf 60° C der Shore-Härte-Wert des einstückig und elastisch ausgestalteten Axial-Radial-Abstützelements um mehr als 10 %, vorzugsweise um mehr als 20 %, und idealerweise um 30 % verringert ist. Hierdurch kann das einstückig und elastisch ausgestaltete Axial-Radial-Abstützelement hinsichtlich seiner körperlichen Gestalteigenschaften besonders vorteilhaft derart ausgelegt werden, dass im Zuge einer Temperaturerhöhung an der Spindellagervorrichtung das Rückstellkräftevermögen des einstückig und elastisch ausgestalteten Axial-Radial-Abstützelements möglichst im selben Maß abnimmt wie das Dämpfungsvermögen des Dämpfungsfluidmittels. Auch dieses kann insbesondere mit dem vorliegenden Elastomerfederkörperelement problemlos erzielt werden.

Dementsprechend ist es vorteilhaft, wenn ein verwendetes Dämpfungsfluidmittel dergestalt ist, dass mit zunehmender Spindellagervorrichtungsbetriebstemperatur von 20° C auf 60° C der Viskositäts-Wert des verwendeten Dämpfungsfluidmittels um mehr als 45 %, vorzugsweise um mehr als 55 %, und idealerweise um 65 % verringerbar ist.

Umfasst das einstückig und elastisch ausgestaltete Axial-Radial-Abstützelement ein Elastomerfederkörperelement mit einem Shore-Härte-Wert zwischen 40 Shore-A und 90 Shore-A, vorzugsweise zwischen 55 Shore-A und 80 Shore-A, können besonders gute Gebrauchseigenschaften erzielt werden.

Die vorstehend genannten Shore-Härte-Werte beziehen sich auf einen Prüftemperaturintervall von 23° C +/- 2 K.

Vorstehende Shore-Härte-Werte können etwa mit einem Elastomerfederkörperelement problemlos erzielt werden, insbesondere wenn dieser beispielsweise aus einem thermoplastischen Polyurethan hergestellt ist.

Allein schon aus den bisher genannten Gründen bildet ein Elastomerfederkörperelement, wie es vorstehend bereits beschrieben ist, herkömmliche Fußlagereinheiten nach einem weiteren Aspekt der Erfindung außergewöhnlich günstig weiter, so dass diesbezügliche Merkmale auch ohne die übrigen Merkmale der vorliegenden Erfindung vorteilhaft sind.

Alternativ kann das vorliegende einstückig und elastisch ausgestaltete Axial-Radial-Abstützelement auch vorteilhaft bereitgestellt werden, wenn das einstückig und elastisch ausgestaltete Axial-Radial-Abstützelement aus einem härteren Kunststoff oder einem Compound hieraus hergestellt ist.

Eine diesbezügliche Beeinflussung des E-Moduls in Abhängigkeit von der Temperatur kann ebenso in Bezug auf einen Gummiwerkstoff als auch hinsichtlich Kunststoffe, wie etwa Acrylnitril-Butadien-Styrol (ABS), Polyamid (PA), Polyvinylchlorid (PVC), Polyethylen (PE), Polycarbonat (PC) oder dergleichen erzielt werden.

Mit zunehmender Temperatur verringert sich auch der Wert des E-Moduls. Durch eine entsprechende geometrische Ausgestaltung des einstückig und elastisch ausgestalteten Axial-Radial-Abstützelements können auch unter Verwendung von härteren Kunststoffen ähnliche Effekte erzielt werden.

Das einstückig und elastisch ausgestaltete Axial-Radial-Abstützelement kann besonders vorteilhaft temperiert werden, wenn es Fluidkanäle für ein Dämpfungsfluidmittel aufweist. Mittels der Fluidkanäle kann das einstückig und elastisch ausgestaltete Axial-Radial-Abstützelement besonders gut von dem Dämpfungsfluidmittel umspült und hierbei erwärmt werden.

Das einstückig und elastisch ausgestaltete Axial-Radial-Abstützelement wird vorteilhafterweise aber auch noch in der sich in Betrieb befindlichen Spindellagervorrichtung entstehende Wärme erwärmt, insbesondere durch die Umgebungstemperatur, die innere Reibung hinsichtlich eines viskoelastischen und viskosen Verformungsanteils, und die äußere Reibung hinsichtlich einer Lagerreibung. Auch ein Schwingungseintrag im Betrieb der Spindellagervorrichtung trägt zu einem Temperaturanstieg bei.

Im Normalbetrieb der Spindellagervorrichtung werden überwiegend Spindellagertemperaturen zwischen 20° C und 60° C erreicht.

Insofern zeichnet sich die vorliegende Fußlagereinrichtung durch eine Einrichtung zur Verringerung von Rückstellkräften in Abhängigkeit von einer Temperaturerhöhung aus.

Eine diesbezüglich bevorzugte Ausführungsvariante sieht vor, dass die Fluidkanäle an einem radial auskragenden Kragenteil des einstückig und elastisch ausgestalteten Axial-Radial-Abstützelements sowohl radial als auch axial erstreckend angeordnet sind.

Ein Umspülen des einstückig und elastisch ausgestalteten Axial-Radial-Abstützelements kann wesentlich verbessert werden, wenn das einstückig und elastisch ausgestaltete Axial-Radial-Abstützelement mit einem in Umfangsrichtung des einstückig und elastisch ausgestalteten Axial-Radial-Abstützelements radial außen umlaufenden Kragenteil nur partiell an einer Innenseite der Gehäusehülse der Spindellagervorrichtung anliegt.

Ein Vorsehen der vorstehend beschriebenen Fluidkanäle ist insbesondere dann enorm von Vorteil, wenn das einstückig und elastisch ausgestaltete Axial-Radial-Abstützelement zumindest teilweise in einem Ölbad liegt.

Insofern ist es vorteilhaft, wenn das einstückig und elastisch ausgestaltete Axial-Radial-Abstützelement in einer Dämpfungsfluidmittelkammer angeordnet ist.

Da speziell herkömmliche Textilmaschinen durch die vorliegende Fußlagereinrichtung bzw. durch die vorliegende Spindellagervorrichtung vorteilhaft weiterentwickelt werden können, wird die Aufgabe der Erfindung auch von einer Textilmaschine mit wenigstens einer Spinn-, Zwirn-, oder Umwindespindel gelöst, welche sich durch eine hier beschriebene Spindellagervorrichtung auszeichnet.

Hierdurch kann eine optimale Dämpfung gleich zu Beginn einer Inbetriebnahme bis zur Erreichung der Betriebstemperatur erzielt werden. Zudem kann vorliegend eine optimale Dämpfung unabhängig einer Umgebungstemperatur, einer Spindeldrehzahl oder sonstigen Betriebsbedingungen erreicht werden.

Die erfindungsgemäße Fußlagereinheit kann als Baugruppe verliersicher vormontiert, ggf. für deren losen Verkauf, bereitgestellt werden.

Weitere Vorteile, Ziele und Eigenschaften vorliegender Erfindung werden anhand anliegender Zeichnungen und nachfolgender Beschreibung erläutert, in welchen beispielhaft eine erfindungsgemäße Fußlagereinheit einer Spindellagervorrichtung einer Textilmaschine dargestellt und beschrieben ist.

In der Zeichnung zeigen:
- Figur 1: schematisch eine Längsschnittansicht einer Spindellagervorrichtung zum Lagern einer Spinnspindel umfassend eine Fußlagereinheit mit einem als Elastomerfederkörperelement ausgebildeten Hülsenkörperelement als einstückig und elastisch ausgestaltetes Axial-Radial-Abstützelement;
- Figur 2: schematisch eine Ansicht eines Härte-Viskositäts-Temperatur-Diagramms der Fußlagereinheit der Spindellagervorrichtung aus der Figur 1;
- Figur 3: schematisch eine erste Zusammenbauansicht der Spindellagervorrichtung aus der Figur 1 hinsichtlich eines ein Spindelaxial- und ein Spindelradiallagerelement umfassenden Lagerbuchsenteils der Fußlagereinheit;
- Figur 4: schematisch eine weitere Zusammenbauansicht der Spindellagervorrichtung aus der Figur 1 hinsichtlich des mit zwei voneinander beabstandet angeordneten Elastomerfederkörperelemente bestückten Lagerbuchsenteils der Fußlagereinheit;
- Figur 5: schematisch eine dritte Zusammenbauansicht der Spindellagervorrichtung aus der Figur 1 hinsichtlich der fertig zusammengesetzten Fußlagereinheit und der Gehäusehülse der Spindellagervorrichtung;
- Figur 6: schematisch eine vierte Zusammenbauansicht der Spindellagervorrichtung aus der Figur 1 hinsichtlich der in die Gehäusehülse eingesetzten Fußlagereinheit und eines Distanzringelements der Spindellagervorrichtung; und
- Figur 7: schematisch eine fünfte Zusammenbauansicht der Spindellagervorrichtung aus der Figur 1 hinsichtlich der in die Gehäusehülse eingesetzten Fußlagereinheit und des in die Gehäusehülse eingesetzten Distanzringelements sowie einer Halslagereinheit der Spindellagervorrichtung.

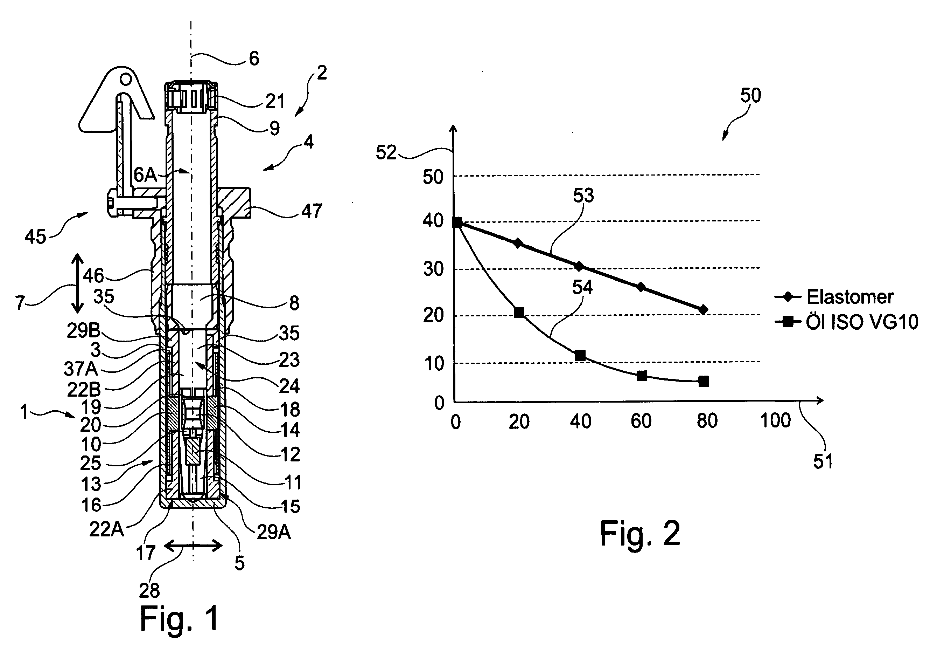

Die in den Figuren 1 und 3 bis 7 gezeigte mit einer erfindungsgemäßen Fußlagereinheit 1 ausgestattete Spindellagervorrichtung 2 zum Lagern einer hier nicht gezeigten Spindel weist eine Gehäusehülse 3 auf, in welcher nicht nur die Fußlagereinheit 1 sondern darüber hinaus auch eine Halslagereinheit 4 zumindest teilweise angeordnet sind.

Die Fußlagereinheit 1 sitzt hierbei einerseits auf einem Bodenbereich 5 der Gehäusehülse 3 auf, so dass die Fußlagereinheit 1 in Bezug auf die Mittelachse 6 der Spindellagervorrichtung 2 axial 7 an dem Bodenbereich 5 festgelegt ist.

Andererseits schließt an der Fußlagereinheit 1 ein Distanzringelement 8 an, das zwischen der Fußlagereinheit 1 und der Halslagereinheit 4 in der Gehäusehülse 3 angeordnet ist. Da die Halslagereinheit 4 in der Gehäusehülse 3 eingepresst festgelegt ist, sind demzufolge sowohl das Distanzringelement 8 als auch die Fußlagereinheit 1 zwischen einem Hülsenrohr 9 der Halslagereinheit 4 und dem Bodenbereich 5 axial gesichert in der Gehäusehülse 3 der Spindellagervorrichtung 2 angeordnet.

Die Fußlagereinheit 1 weist ein Lagerbuchsenelement 10 auf, welches in diesem Ausführungsbeispiel vorteilhafterweise aus einem formstabilen Kunststoff hergestellt ist, um einen präzisen Spindellagersitz zu gewährleisten und die Schwingungsdämpfung verlustfrei auf das Dämpfungsmedium zu übertragen. Außerdem ist ein Kunststoff im Spritzgießverfahren kostengünstig herstellbar und lässt eine Formgestaltung zum Beispiel mit Durchbrüchen zu, die beim Befüllen Luft entweichen lassen und eine Ölzirkulation ermöglichen.

In dem Lagerbuchsenelement 10 sind zum einen ein Spindelaxiallagerelement 11 und zum anderen ein Spindelradiallagerelement 12 untergebracht, mit deren Hilfe die Spindel (hier nicht gezeigt) an der Fußlagereinheit 1 drehsicher axial und radial gelagert ist. Als Spindelaxiallagerelement 11 und Spindelradiallagerelement 12 können vorteilhafterweise herkömmliche Lagerelemente eingesetzt werden, so dass diese hier nicht weiter erläutert werden.

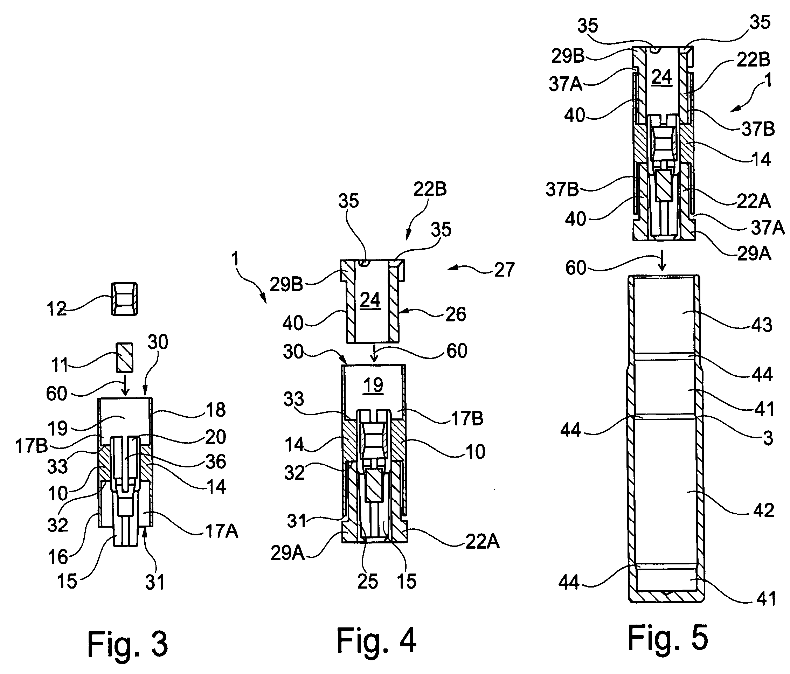

Das Spindelaxiallagerelement 11 und das Spindelradiallagerelement 12 werden hierbei in einem Lagerelementeaufnahmeraum 13 des Lagerbuchsenelements 10 platziert, welcher sich von einem Mittenteil 14 des Lagerbuchsenelements 10 bis in einen Haltedomteil 15 (siehe insbesondere auch Figur 3) des Lagerbuchsenelements 10 hinein erstreckt. Zwischen dem Haltedornteil 15 und einem sich von dem Mittelteil 14 erstreckenden ersten Wandungssteg 16 des Lagerbuchsenelements 10 ergibt sich ein konzentrisch um die Mittelachse 6 umlaufender Zwischenbereich 17A.

Der Haltedornteil 15 stellt eine Innenwandung hinsichtlich des Zwischenbereichs 17A und der erste Wandungssteg 16 eine Außenwandung hinsichtlich des Zwischenbereichs 17A dar.

Darüber hinaus weist das Lagerbuchsenelement 10 noch einen sich von dem Mittenteil 14 erstreckenden zweiten Wandungssteg 18 auf, welcher einen anderen Innenbereich 19 des Lagerbuchsenelements 10 radial umgrenzt. In diesem anderen Innenbereich 19 befindet sich noch ein Zentrierstutzen 20. Der Wandungssteg 18 stellt dabei eine Außenwandung und der Zentrierstutzen 20 eine Innenwandung des Zwischenbereiches 17B dar.

Eine weitere Lagerung erfährt die Spindel (hier nicht gezeigt) an der Halslagereinheit 4 der Spindellagervorrichtung 2 durch ein Rollenlager 21 in an sich bekannter Weise. Das Rollenlager 21 ist in dem Hülsenrohr 9 der Halslagereinheit 4 eingepresst.

Insofern kann sich die so gelagerte Spindel selbst mit enorm hohen Drehzahlen um die Mittelachse 6 der Spindellagervorrichtung 2 drehen. Die Mittelachse 6 formuliert somit sogleich die Drehachse 6A der hier nicht dargestellten Spindel.

Die Fußlagereinheit 1 zeichnet sich des Weiteren erfindungsgemäß durch ein einstückig und elastisch ausgestaltetes Axial-Radial-Abstützelement 22A in Gestalt eines vorteilhaften Hülsenkörperelements aus, wobei die Fußlagereinheit 1 in diesem Ausführungsbeispiel zwei derartige einstückig und elastisch ausgestaltete Axial-Radial-Abstützelemente 22A und 22B aufweist. Insofern wird das Lagerbuchsenelement 10 auch durch zwei Hülsenkörperelemente (22A und 22B) gegenüber der Gehäusehülse 3 vorteilhaft abgestützt.

Die beiden einstückig und elastisch ausgestalteten Axial-Radial-Abstützelemente 22A und 22B sind durch den Mittenteil 14 des Lagerbuchsenelements 10 axial voneinander beabstandet innerhalb des Spindellagervorrichtung 2 angeordnet, wodurch sich die Fußlagereinheit 1 besonders vorteilhaft an der Gehäusehülse 3 abstützen kann.

Mit Hilfe der einstückig und elastisch ausgestalteten Axial-Radial-Abstützelemente 22A und 22B ist das Lagerbuchsenelement 10 konstruktiv besonders einfach sowohl axial beweglich als auch radial beweglich in der Gehäusehülse 2 der Spindellagervorrichtung 2 federnd aber auch dämpfend gelagert.

Die einstückig und elastisch ausgestalteten Axial-Radial-Abstützelemente 22A und 22B weisen innen jeweils einen durchgängigen Hohlraum 23 auf, durch welchen hindurch entweder die hier nicht eingezeichnete Spindel geführt werden kann (siehe Hülsenkörperelement 22B), oder in dem Hohlraum 23 befindet sich das Haltedornteil 15, wie dies hinsichtlich des einstückig und elastisch ausgestalteten Axial-Radial-Abstützelements 22A der Fall ist, oder das Zentrierstutzenteil 20, wie dies hinsichtlich des einstückig und elastisch ausgestalteten Axial-Radial-Abstützelements 22B der Fall ist.

Insofern umfassen die einstückig und elastisch ausgestalteten Axial-Radial-Abstützelemente 22A und 22B einerseits einen Spindel- und Zentrierstutzenaufnahmeraum 24 (siehe Hülsenkörperelemente 22B) und andererseits einen Haltedornteilaufnahmeraum 25, wodurch sich der Aufbau der Fußlagereinheit 1 vorteilhafterweise weiter vereinfacht.

Die hier eingesetzten einstückig und elastisch ausgestalteten Axial-Radial-Abstützelemente 22A und 22B zeichnen sich unter anderem jeweils durch einen zylindrischen Grundkörper 26 (nur beispielhaft bzgl. 22B beziffert, siehe insbesondere Figur 4) aus, an dessen einem Ende 27 ein radial 28 auskragender Kragenteil 29A bzw. 29B des jeweiligen einstückig und elastisch ausgestalteten Axial-Radial-Abstützelements 22A bzw. 22B ausgeformt ist, welcher im eingebauten Zustand an den beiden Kopfseiten 30 und 31 (siehe beispielsweise Figuren 3 und 4) des Lagerbuchsenelements 10 zumindest axial 7 über das Lagerbuchsenelement 10 übersteht.

Hierbei ist das einstückig und elastisch ausgestaltete Axial-Radial-Abstützelement 22A in dem Zwischenbereich 17A und das einstückig und elastisch ausgestaltete Axial-Radial-Abstützelement 22B in dem anderen Innenbereich 19 des Lagerbuchsenelements 10 eingesteckt und angeordnet.

Das einstückig und elastisch ausgestaltete Axial-Radial-Abstützelement 22A stützt sich in dem Zwischenbereich 17A an einer ersten Axialabstützfläche 32 und das einstückig und elastisch ausgestaltete Axial-Radial-Abstützelement 22B stützt sich in dem anderen Innenbereich 19 an einer weiteren Axialabstützfläche 33 ab (siehe insbesondere Figuren 3 und 4).

Die erste Axialabstützfläche 32 verläuft hierbei in dem Zwischenbereich 17A senkrecht zur Mittelachse 6.

Die weitere Axialabstützfläche 33 verläuft in dem anderen Innenbereich 19 ebenfalls senkrecht zur Mittelachse 6.

In den einstückig und elastisch ausgestalteten Axial-Radial-Abstützelementen 22A und 22B sind jeweils Fluidkanäle 35 (hier nur exemplarisch beziffert, siehe insbesondere Figur 3) ausgestaltet, wodurch das jeweilige einstückig und elastisch ausgestaltete Axial-Radial-Abstützelement 22A und 22B vorteilhaft von einem Dämpfungsmittelfluid (hier nicht gezeigt), wie Öl, umspült werden kann.

Diese Fluidkanäle 25 befinden sich insbesondere an dem jeweiligen radial auskragenden Kragenteil 29A bzw. 29B der einstückig und elastisch ausgestalteten Axial-Radial-Abstützelemente 22A und 22B.

Somit liegen die einstückig und elastisch ausgestalteten Axial-Radial-Abstützelemente 22A und 22B jeweils mit dem in Umfangsrichtung der einstückig und elastisch ausgestalteten Axial-Radial-Abstützelemente 22A und 22B radial 28 außen umlaufenden Kragenteil 29A bzw. 29B nur partiell an einer Innenseite der Gehäusehülse 3 der Spindellagervorrichtung 2 an.

Mit Hilfe der Fluidkanäle 29A, 29B kann das Öl die beiden einstückig und elastisch ausgestalteten Axial-Radial-Abstützelemente 22A und 22B wesentlich besser umspülen, wodurch diese sich schneller und effektiver an die jeweilige Spindellagervorrichtungsbetriebstemperatur anpassen können.

Dies ist insbesondere hinsichtlich des weiteren Aspekts der Erfindung vorteilhaft, da die beiden einstückig und elastisch ausgestalteten Axial-Radial-Abstützelemente 22A und 22B in diesem Ausführungsbeispiel derart ausgestaltet sind, dass mit zunehmender Spindellagervorrichtungsbetriebstemperatur das Rückstellkräftevermögen der einstückig und elastisch ausgestalteten Axial-Radial-Abstützelemente 22A und 22B und das Dämpfungsvermögen des Dämpfungsfluidmittels proportional zueinander abnehmbar ausgebildet sind. Hierdurch verschiebt sich ein gut abgestimmtes Verhältnis zwischen dem Rückstellkräftevermögen und dem Dämpfungsvermögen nicht oder nur unkritisch zueinander, wodurch wesentlich bessere Laufeigenschaften an der Spindellagervorrichtung 2 erzielt werden.

Gemäß einem anderen Aspekt der Erfindung können die vorliegenden einstückig und elastisch ausgestalteten Axial-Radial-Abstützelemente 22A und 22B konstruktiv besonders vorteilhaft bereitgestellt werden, wenn sie jeweils als ein Elastomerfederkörperelement 40 (siehe beispielsweise Figur 4) aus einem thermoplastischen Polyurethan mit einer Shore-A-Härte von 55 bis 80 Shore-A verkörpert sind.

Hierdurch sind die einstückig und elastisch ausgestalteten Axial-Radial-Abstützelemente 22A und 22B in diesem Ausführungsbeispiel derart ausgestaltet, dass sich die Shore-A-Härte des jeweiligen Elastomerfederkörperelements 40 mit zunehmender Spindellagervorrichtungsbetriebstemperatur von 20° C auf 60° C um 30 % verringert.

Eine Zirkulation des Öls im Bereich der Fußlagereinheit 1 kann darüber hinaus noch durch Zirkulationsschlitze 36 (siehe insbesondere Figur 3) an dem Lagerbuchsenelement 10 verbessert werden, da sich dieses Öl innerhalb der Gehäusehülse 3 wesentlich besser verteilen kann, so dass dieses Öl nicht nur zur guten Schmierung des Spindelaxiallagerelements 11 und des Spindelradiallagerelements 12 dienen kann, sondern darüber hinaus auch einer ausgezeichneten Radialdämpfung des Lagerbuchsenelements 10 gegenüber der Gehäusehülse 3.

Diese Zirkulationsschlitze 36 erstrecken sich in länglicher Form in Richtung der Mittelachse 6 und sind am Umfang des Haltedornteils 15 konzentrisch um diese Mittelachse 6 herum angeordnet.

Um eine Ölversorgung für eine gute Dämpfung zwischen dem Lagerbuchsenelement 10 und der Gehäusehülse 3 gewährleisten zu können, befindet sich zwischen den einstückig und elastisch ausgestalteten Axial-Radial-Abstützelementen 22A und 22B und den Kopfseiten 30 bzw. 31 des Lagerbuchsenelements 10 jeweils noch ein konzentrisch umlaufender Ölspalt 37A. Der Ölspalt 37B setzt sich dabei in den Bereich zwischen Axial-Radial-Abstützelementen 22A und 22B und der Außenwandung 16, 18 (nur exemplarisch beziffert, siehe insbesondere auch Figur 5).

Nach der Darstellung gemäß der Figur 5 ist auch noch sehr gut ein Sitzabschnitt 41 für den radial auskragenden Kragenteil 29A des einstückig und elastisch ausgestalteten Axial-Radial-Abstützelements 22A und ein Sitzabschnitt 41 für den radial auskragenden Kragenteil 29B des einstückig und elastisch ausgestalteten Axial-Radial-Abstützelements 22B erkennbar, wobei zwischen den beiden Sitzabschnitten 41 noch ein Dämpfungsfluidmittelabschnitt 42 angeordnet ist, der sich dadurch auszeichnet, dass dort die Gehäusehülse 3 einen etwas größeren Innendurchmesser aufweist als im Bereich der beiden Sitzabschnitte 41. Insofern erfährt das Lagerbuchsenelement 10 in dem Dämpfungsfluidmittelabschnitt 42 eine besonders gute Radialdämpfung durch einen sich dort gut bildbaren Ölfilm.

Die Übergänge zwischen den beiden Sitzabschnitten 41 und dem Dämpfungsfluidmittelabschnitt 42 einerseits bzw. zwischen einem der Sitzabschnitte 41 und einem Hülsenrohrsitzabschnitt 43 andererseits sind durch die Bezugsziffer 44 gekennzeichnet.

Wie aus der Figur 1 noch gut zu erkennen ist, ist die Spindellagervorrichtung 2 mittels eines Spannmechanismus 45 in einer Haltevorrichtung 46 einer Textilmaschine 47 festgelegt.

Bei dem in der Figur 2 dargestellten Härte-Viskositäts-Temperatur-Diagramm 50 der vorliegenden Spindellagervorrichtung 2 ist auf der Abszissenachse 51 die Betriebstemperatur der Spindellagervorrichtung 2 in °C abgetragen, während auf der Ordinatenachse 52 sowohl die Shore-D-Härte-Werte 53 des Elastomerfederkörperelements 40 als auch die Viskositäts-Werte 54 des an der Spindellagervorrichtung 2 verwendeten Dämpfungsfluidmittels - Öl ISO VG10 - abgetragen sind.

Bei einer Betriebstemperatur von ca. 20° C weist das gewählte Dämpfungsfluidmittel eine Viskosität von 20 mm²/s und das gewählte Elastomerfederkörperelement 40 eine Härte von ca. 35 Shore-D auf, wobei diese Werte bei steigender Betriebstemperatur auf ca. 60° C hinsichtlich des Dämpfungsfluidmittels auf einen Wert von ca. 7 mm²/s und hinsichtlich des Elastomerfederkörperelements 40 auf einen Wert von ca. 25 Shore-D abgesunken sind.

Hierbei fallen die Shore-D-Werte hinsichtlich des Elastomerfederkörperelements 40 nahezu linear ab, während die Viskositätswerte hinsichtlich des Dämpfungsfluidmittels logarithmisch abfallen, wodurch das Rückstellkräftevermögen des Elastomerfederkörperelements 40 und das Dämpfungsvermögen des Dämpfungsfluidmittels sich insbesondere in diesem Temperaturintervall im Wesentlichen proportional zueinander verhalten.

Die Darstellungen gemäß der Figuren 3 bis 7 zeigen einen vorteilhaften Montageablauf der Spindellagervorrichtung 2, wobei der Übersichtlichkeit halber nicht in allen diesen Darstellungen alle Bezugszeichen eingezeichnet sein müssen.

In der Figur 3 ist das Lagerbuchsenelement 10, das Spindelaxiallagerelement 11 und das Spindelradiallagerelement 12 dargestellt. In das Lagerbuchsenelement 10 werden gemäß der Montagerichtung 60, welche mit der Mittelachse 6 im Wesentlichen fluchtet, zuerst das Spindelaxiallagerelement 11 und anschließend das Spindelradiallagerelement 12 eingefügt und in dem Lagerelementeaufnahmeraum 13 platziert.

In einem weiteren Schritt gemäß der Figur 4 ist das erste einstückig und elastisch ausgestaltete Axial-Radial-Abstützelement 22A bereits in dem Zwischenbereich 17A derart eingeführt, dass es auf der ersten durch das Lagerbuchenelement 10 definierten Axialabstützfläche 32 aufsitzt. Hierbei verbleibt an der Kopfseite 31 des Lagerbuchsenelements 10 zwischen diesem und dem radial auskragenden Kragenteil des ersten einstückig und elastisch ausgestalteten Axial-Radial-Abstützelements 22A der Ölspalt 37A und zwischen dem Axial-Radial-Abstützelements 22A und dem Wandungssteg 16 der Ölspalt 37B. Ähnlich verhält es sich hinsichtlich des zweiten einstückig und elastisch ausgestalteten Axial-Radial-Abstützelements 22B, welches gemäß der Montagerichtung 60 in den Innenbereich 19 des Lagerbuchsenelements 10 eingeführt wird, bis es im Bereich der Kopfseite 30 auf einer weiteren Axialabstützfläche 33 des Lagerbuchsenelements 10 derart aufsitzt, dass zwischen letzterem und dem zweiten einstückig und elastisch ausgestalteten Axial-Radial-Abstützelement 22B ebenfalls ein Ölspalt 37A verbleibt. Zwischen dem Axial-Radial-Abstützelement 22B und dem Wandungssteg 28 verbleibt der Ölspalt 37B.

Die derart vormontierte Fußlagereinheit 1 wird nun gemäß der Darstellung nach der Figur 5 in Montagerichtung 60 in die Gehäusehülse 3 der Spindellagervorrichtung 2 eingesteckt, bis die Fußlagereinheit 1 mit dem ersten einstückig und elastisch ausgestalteten Axial-Radial-Abstützelement 22A axial auf den Bodenbereich 5 der Gehäusehülse 3 aufsitzt.

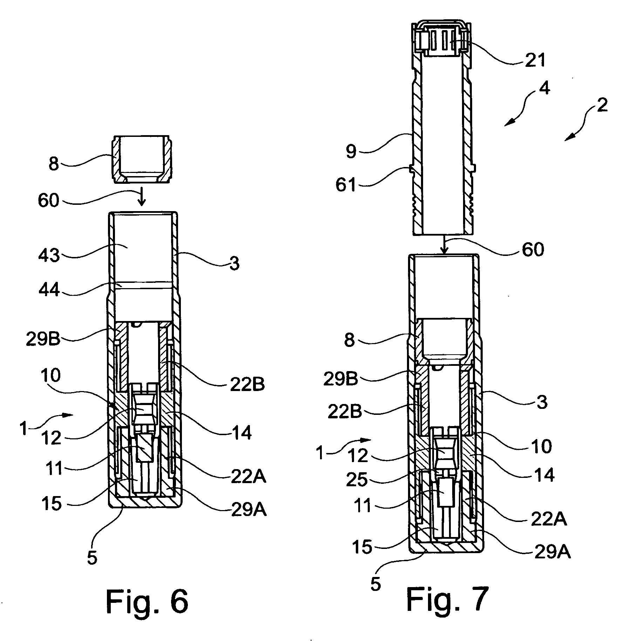

Ist die Fußlagereinheit 1 gemäß der Darstellung nach Figur 6 eingesteckt, folgt das Distanzringelement 8, welches ebenfalls in Montagerichtung 60 in die Gehäusehülse 3 eingeführt wird, bis es auf dem zweiten einstückig und elastisch ausgestalteten Axial-Radial-Abstützelement 22B aufsitzt.

Abschließend wird noch die Halslagereinheit 4 bis zum umlaufenen Steg 61 des Hülsenrohrs 9 in die Gehäusehülse 3 eingepresst, so dass letztendlich die einsatzbereite Spindellagervorrichtung 2 (siehe Figur 1) fertig montiert vorliegt. Hierbei liegt das Hülsenrohr 9 auf dem Distanzringelement 8 derart auf, dass dieses und die Fußlagereinheit 1 in der Gehäusehülse 3 festgelegt sind.

Es versteht sich, dass es sich bei dem vorstehend erläuterten Ausführungsbeispiel lediglich um eine erste Ausgestaltung der erfindungsgemäßen Fußlagereinheit einer Spindellagervorrichtung an einer Textilmaschine handelt. Insofern beschränkt sich die Ausgestaltung der Erfindung nicht auf dieses Ausführungsbeispiel.

### Bezugszeichenliste:

- 1: Fußlagereinheit
- 2: Spindellagervorrichtung
- 3: Gehäusehülse
- 4: Halslagereinheit
- 5: Bodenbereich
- 6: Mittelachse
- 6A: Drehachse
- 7: axial
- 8: Distanzringelement
- 9: Hülsenrohr
- 10: Lagerbuchsenelement
- 11: Spindelaxiallagerelement
- 12: Spindelradiallagerelement
- 13: Lagerelementeaufnahmeraum
- 14: Mittenteil
- 15: Haltedomteil
- 16: erster Wandungssteg
- 17A: Zwischenbereich
- 17B: Zwischenbereich
- 18: zweiter Wandungssteg
- 19: Innenbereich
- 20: Zentrierstutzen
- 21: Rollenlager
- 22A: erstes einstückig und elastisch ausgestaltetes Axial-Radial-Abstützelement
- 22B: zweites einstückig und elastisch ausgestaltetes Axial-Radial-Abstützelement
- 23: Hohlraum
- 24: Spindel- und Zentrierstutzenaufnahmeraum
- 25: Haltedornteilaufnahmeraum
- 26: zylindrischer Grundkörper
- 27: Ende
- 28: radial
- 29A: auskragendes Kragenteil
- 29B: auskragendes Kragenteil
- 30: erste Kopfseite
- 31: zweite Kopfseite
- 32: erste Axialabstützfläche
- 33: weitere Axialabstützfläche
- 35: Fluidkanäle
- 36: Zirkulationsschlitze
- 37A: Ölspalt
- 37B: Ölspalt
- 40: Elastomerfederkörperelement
- 41: Sitzabschnitte
- 42: Dämpfungsfluidmittelabschnitt
- 43: Hülsenrohrsitzabschnitt
- 44: Übergänge
- 45: Spannmechanismus
- 46: Haltevorrichtung
- 47: Textilmaschine
- 50: Härte-Viskositäts-Temperatur-Diagramm
- 51: Abszissenachse
- 52: Ordinatenachse
- 53: Shore-A-Härte-Werte
- 54: Viskositäts-Werte
- 60: Montagerichtung
- 61: umlaufender Steg

## Patentansprüche

1. Spindellagervorrichtung (2) mit einer Fußlagereinheit (1) zum Lagern einer Spindel, insbesondere einer Spinn-, Zwirn- oder Umwindespindel, wobei die Fußlagereinheit (1) ein Spindelaxiallagerelement (11) zum axialen Lagern der Spindel und ein Spindelradiallagerelement (12) zum radialen Lagern der Spindel aufweist, wobei das Spindelaxiallagerelement (11) und das Spindelradiallagerelement (12) in einem gemeinsamen Lagerbuchsenelement (10) gehaltert sind, ***dadurch gekennzeichnet, dass*** das gemeinsame Lagerbuchsenelement (10) mittels wenigstens eines einstückig und elastisch ausgestalteten Axial-Radial-Abstützelements (22A, 22B) an einer Gehäusehülse (3) der Spindellagervorrichtung (2) sowohl axial als auch radial gelagert angeordnet ist und *dass* das Axial-Radial-Abstützelement (22A, 22B) zumindest teilweise in einem Zwischenbereich (17A, 17B) zwischen einer Innenwandung (15, 20) und einer Außenwandung (16, 18) des Lagerbuchsenelements (10) innerhalb des Lagerbuchsenelements (10) angeordnet ist.

2. Spindellagervorrichtung (2)nach Anspruch 1, ***dadurch gekennzeichnet, dass*** zwischen der Innenwandung (15, 20) oder der Außenwandung (16, 18) auf der einen und dem Axial-Radial-Abstützelements (22A, 22B) auf der anderen Seite ein Spalt (37B) für ein Dämpfungsfluidmittel vorhanden ist.

3. Spindellagervorrichtung (2)nach Anspruch 1 oder 2, ***dadurch gekennzeichnet, dass*** zwei Axial-Radial-Abstützelemente (22A, 22B) axial (7) beanstandet voneinander zumindest teilweise innerhalb des Lagerbuchsenelements (10) angeordnet sind.

4. Spindellagervorrichtung (2)nach einem der Ansprüche 1 bis 3, ***dadurch gekennzeichnet, dass*** das Axial-Radial-Abstützelement (22A, 22B) einen zylindrischen Grundkörper (26) mit einem radial auskragenden Kragenteil (29A, 29B) aufweist, welches an einer Kopfseite (30, 31) des Lagerbuchsenelements (10) zumindest axial (7) über das Lagerbuchsenelement (10) übersteht.

5. Spindellagervorrichtung (2)nach einem der Ansprüche 1 bis 4, ***dadurch gekennzeichnet, dass*** das Axial-Radial-Abstützelement (22A, 22B) ein Elastomerfederkörperelement (40) umfasst.

6. Spindellagervorrichtung (2)nach einem der Ansprüche 1 bis 5, ***dadurch gekennzeichnet, dass*** das Axial-Radial-Abstützelement (22A, 22B) derart ausgestaltet ist, dass mit zunehmender Spindellagervorrichtungsbetriebstemperatur von 20 °C auf 60 °C der Shore-Härte-Wert des Axial-Radial-Abstützelements (22A, 22B) um mehr als 10 %, vorzugsweise um mehr als 20 %, und idealerweise um 30 % verringert ist.

7. Spindellagervorrichtung (2)nach einem der Ansprüche 1 bis 6, ***dadurch gekennzeichnet, dass*** das Axial-Radial-Abstützelement (22A, 22B) ein Elastomerfederkörperelement (40) mit einem Shore-Härte-Wert zwischen 40 Shore-A und 90 Shore-A, vorzugsweise zwischen 55 Shore-A und 80 Shore-A, bei einem Prüftemperaturintervall von 23°C +/- 2K umfasst.

8. Spindellagervorrichtung (2)nach einem der Ansprüche 4 bis 7, ***dadurch gekennzeichnet, dass*** das Axial-Radial-Abstützelement (22A, 22B) Fluidkanäle (35) für ein Dämpfungsfluidmittel aufweist, wobei insbesondere die Fluidkanäle (35) an dem radial auskragenden Kragenteil (29A, 29B) des Axial-Radial-Abstützelements (22A, 22B) sich sowohl radial (28) als auch axial (7) erstreckend angeordnet sind.

9. Spindellagervorrichtung (2)nach einem der Ansprüche 4 bis 8, ***dadurch gekennzeichnet, dass*** das Axial-Radial-Abstützelement (22A, 22B) mit dem in Umfangsrichtung des Axial-Radial-Abstützelements (22A, 22B) radial auskragenden Kragenteil (29A, 29B) nur partiell an einer Innenseite der Gehäusehülse (3) der Spindellagervorrichtung (2) anliegt.

10. Spindellagervorrichtung (2) nach einem der vorherigen Ansprüche, **dadurch gekennzeichnet, dass** eine Halslagereinheit (4) und die Fußlagereinheit (1) in der Gehäusehülse (3) der Spindellagervorrichtung (2) angeordnet sind.

11. Textilmaschine (47) mit wenigstens einer Spinn-, Zwirn- oder Umwindespindel, ***gekennzeichnet durch*** eine Spindellagervorrichtung (2) nach einem der Ansprüche 1 bis 10.

## Claims

1. Spindle bearing device (2) comprising a base bearing unit (1) for supporting a spindle, in particular a spinning, twisting or covering spindle, wherein the base bearing unit (1) comprises a spindle axial bearing element (11) for axially supporting the spindle and a spindle radial bearing element (12) for radially supporting the spindle, wherein the spindle axial bearing element (11) and the spindle radial bearing element (12) are mounted in a common bearing bush element (10), **characterised in that** the common bearing bush element (10) is arranged by means of at least one one-piece and elastically configured axial radial support element (22A, 22B) on a housing sleeve (3) of the spindle bearing device (2) both axially and radially and **in that** the axial radial support element (22A, 22B) is arranged at least partly in an intermediate area (17A, 17B) between an inner wall (15, 20) and an outer wall (16, 18) of the bearing bush element (10) inside the bearing bush element (10).

2. Spindle bearing device (2) according to claim 1, **characterised in that** between the inner wall (15, 20) or the outer wall (16, 18) on one side and the axial radial support element (22A, 22B) on the other side a gap (37B) is provided for a damping fluid.

3. Spindle bearing device (2) according to claim 1 or 2, **characterised in that** two axial radial support elements (22A, 22B) are arranged spaced apart axially (7) from one another at least partly inside the bearing bush element (10).

4. Spindle bearing device (2) according to any one of claims 1 to 3, **characterised in that** the axial radial support element (22A, 22B) comprises a cylindrical main body (26) with a radially projecting collar part (29A, 29B), which projects over the bearing bush element (10) on a head side (30, 31) of the bearing bush element (10) at least axially (7).

5. Spindle bearing device (2) according to any one of claims 1 to 4, **characterised in that** the axial radial support element (22A, 22B) comprises an elastomer spring body element (40).

6. Spindle bearing device (2) according to any one of claims 1 to 5, **characterised in that** the axial radial support element (22A, 22B) is configured such that with an increasing spindle bearing device operating temperature of 20 °C to 60 °C the Shore hardness value of the axial radial support element (22A, 22B) is reduced by more than 10 %, preferably by more than 20 %, and ideally by 30 %.

7. Spindle bearing device (2) according to any one of claims 1 to 6, **characterised in that** the axial radial support element (22A, 22B) comprises an elastomer spring body element (40) with a Shore hardness value between 40 Shore A and 90 Shore A, preferably between 55 Shore A and 80 Shore A, at a testing temperature interval of 23°C +/-2K.

8. Spindle bearing device (2) according to any one of claims 4 to 7, **characterised in that** the axial radial support element (22A, 22B) comprises fluid channels (35) for a damping fluid, wherein in particular the fluid channels (35) are arranged on the radially projecting collar part (29A, 29B) of the axial radial support element (22A, 22B) extending both radially (28) and axially (7).

9. Spindle bearing device (2) according to any one of claims 4 to 8, **characterised in that** the axial radial support element (22A, 22B) with the collar part (29A, 29B) projecting radially in circumferential direction of the axial radial support element (22A, 22B) only bears partially on an inner side of the housing sleeve (3) of the spindle bearing device (2).

10. Spindle bearing device (2) according to any one of the preceding claims, **characterised in that** a neck bearing unit (4) and the base bearing unit (1) are arranged in the housing sleeve (3) of the spindle bearing device (2).

11. Textile machine (47) comprising at least one spinning, twisting or covering spindle, **characterised by** a spindle bearing device (2) according to any one of claims 1 to 10.

## Revendications

1. Dispositif (2) de montage de broches, muni d'un palier d'embase (1) dévolu au montage d'une broche, en particulier d'une broche de filage, de retordage ou de bobinage, ledit palier d'embase (1) comprenant un élément (11) affecté au montage axial de la broche et un élément (12) affecté au montage radial de ladite broche, ledit élément (11) de montage axial de la broche et ledit élément (12) de montage radial de la broche étant retenus dans un élément commun (10) à coussinet de palier, **caractérisé par le fait que** l'élément commun (10) à coussinet de palier est installé avec assise tant dans le sens axial que dans le sens radial, à l'aide d'au moins un élément (22A, 22B) de réalisation monobloc et élastique procurant un appui dans les sens axial et radial, sur une douille (3) formant boîtier dudit dispositif (2) de montage de broches ; et **par le fait que** ledit élément (22A, 22B) d'appui axial et radial est placé, au moins en partie, à l'intérieur de l'élément (10) à coussinet de palier, dans une région intermédiaire (17A, 17B) située entre une paroi intérieure (15, 20) et une paroi extérieure (16, 18) dudit élément (10) à coussinet de palier.

2. Dispositif (2) de montage de broches, selon la revendication 1, **caractérisé par le fait qu'**un espace interstitiel (37B), destiné à un fluide d'amortissement, est réservé entre la paroi intérieure (15, 20) ou la paroi extérieure (16, 18) sur l'un des côtés, et l'élément (22A, 22B) d'appui axial et radial, sur l'autre côté.

3. Dispositif (2) de montage de broches, selon la revendication 1 ou 2, **caractérisé par le fait que** deux éléments (22A, 22B), procurant un appui dans les sens axial et radial, sont logés au moins en partie à l'intérieur de l'élément (10) à coussinet de palier, avec espacement l'un de l'autre dans le sens axial (7).

4. Dispositif (2) de montage de broches, selon l'une des revendications 1 à 3, **caractérisé par le fait que** l'élément (22A, 22B) d'appui axial et radial présente un corps cylindrique de base (26) pourvu d'une collerette (29A, 29B) en débord dans le sens radial, qui fait saillie au-delà de l'élément (10) à coussinet de palier, au moins dans le sens axial (7), au niveau d'une face extrême (30, 31) dudit élément (10) à coussinet de palier.

5. Dispositif (2) de montage de broches, selon l'une des revendications 1 à 4, **caractérisé par le fait que** l'élément (22A, 22B) d'appui axial et radial inclut un élément (40) formant corps en élastomère doué d'élasticité.

6. Dispositif (2) de montage de broches, selon l'une des revendications 1 à 5, **caractérisé par le fait que** l'élément (22A, 22B) d'appui axial et radial est conçu de telle sorte que la valeur de dureté Shore dudit élément (22A, 22B) d'appui axial et radial soit réduite de plus de 10 %, de préférence de plus de 20 %, et idéalement de 30 % lorsque la température de service dudit dispositif de montage de broches croît, pour passer de 20 °C à 60 °C.

7. Dispositif (2) de montage de broches, selon l'une des revendications 1 à 6, **caractérisé par le fait que** l'élément (22A, 22B) d'appui axial et radial inclut un élément (40) formant corps en élastomère doué d'élasticité, présentant une valeur de dureté Shore comprise entre 40 Shore A et 90 Shore A, de préférence entre 55 Shore A et 80 Shore A pour un intervalle de température d'essai de 23 °C +/- 2 K.

8. Dispositif (2) de montage de broches, selon l'une des revendications 4 à 7, **caractérisé par le fait que** l'élément (22A, 22B) d'appui axial et radial présente des canaux (35) dédiés à un fluide d'amortissement, sachant notamment que lesdits canaux (35) à fluide sont situés, avec étendue tant dans le sens radial (28) que dans le sens axial (7), au niveau de la collerette (29A, 29B) en débord radial sur ledit élément (22A, 22B) d'appui axial et radial.

9. Dispositif (2) de montage de broches, selon l'une des revendications 4 à 8, **caractérisé par le fait que** l'élément (22A, 22B) d'appui axial et radial n'est que partiellement en applique, par la collerette (29A, 29B) en débord radial dans le sens périphérique dudit élément (22A, 22B) d'appui axial et radial, contre une face interne de la douille (3) formant boîtier dudit dispositif (2) de montage de broches.

10. Dispositif (2) de montage de broches, selon l'une des revendications précédentes, **caractérisé par le fait qu'**un palier de collet (4), et le palier d'embase (1), sont logés dans la douille (3) formant boîtier dudit dispositif (2) de montage de broches.

11. Machine textile (47) équipée d'au moins une broche de filage, de retordage ou de bobinage, **caractérisée par** un dispositif (2) de montage de broches conforme à l'une des revendications 1 à 10.
